# EUROPÄISCHE PATENTSCHRIFT

(11) **EP 2 105 544 B1**
(45) Veröffentlichungstag und Bekanntmachung des Hinweises auf die Patenterteilung: **24.07.2013**
(21) Anmeldenummer: 08405091.3
(22) Anmeldetag: 27.03.2008
(51) Int. Cl.: E03D 11/14, F16L 5/04

(54) **Sanitäreinrichtung mit einem Brandschutzelement**
Sanitary device with a flame retardant element
Dispositif sanitaire doté d'un élément intumescent

(43) Veröffentlichungstag der Anmeldung: 30.09.2009
(73) Patentinhaber: Geberit International AG, 8645 Jona (CH)
(72) Erfinder: Weber, Lothar, 8646 Wagen (CH)
(74) Vertreter: Frischknecht, Harry Ralph

(56) Entgegenhaltungen:
- EP-A- 0 407 352
- CH-A5- 675 211
- DE-A1- 4 124 460
- DE-A1- 19 834 941
- DE-A1- 19 840 712
- DE-U1- 8 424 828
- US-A- 5 351 448

## Beschreibung

Die Erfindung betrifft eine Sanitäreinrichtung nach dem Obergriff des Anspruchs 1. Sanitäreinrichtungen besitzen in der Regel Durchbrüche, durch die im Brandfall Feuer und Rauch hindurchtreten kann, wenn keine Brandschutzmassnahmen getroffen sind. Brandschutzelemente dienen dazu, diese Öffnungen im Brandfall zu verschliessen. Sie weisen beispielsweise intumeszierendes Material auf, das sich bei einer vorbestimmten Temperatur um ein Mehrfaches seines Volumens ausdehnt und damit sämtliche Durchgänge verschliesst. Die Öffnungen, die verschlossen werden sollen, sind beispielsweise Öffnungen in einer Abdeckwand, die beispielsweise aus Gipskartonplatten hergestellt ist. Die Öffnungen sind beispielsweise die Revisionsöffnung für einen Spülkasten, welcher hinter der Wand angeordnet ist oder Durchgänge für ein Spülrohr und ein Abflussrohr eines Keramikkörpers, beispielsweise einer WC-Schüssel.

Im Stand der Technik ist durch die EP-A-1 550 775 des Anmelders eine Anschlussvorrichtung für Sanitärkörper bekannt geworden, bei welcher in einer Öffnung einer Beplankung eine Muffe eingesetzt ist, innerhalb der ein Brandschutzmaterial angeordnet ist. Im Brandfall verschliesst das Brandschutzmaterial infolge seiner Expansion den Durchgang durch die Beplankung.

Die US 5,351,448 offenbart ein Brandschutzelement das auf ein Kunststoffrohr aufgeschoben und an Platten befestigt ist, die ebenfalls auf das Rohr aufgeschoben sind und in einem Mauerdurchbruch eingesetzt sind. Im Brandfall expandiert Brandschutzmittel und füllt nach dem Schmelzen des Rohrs den Mauerdurchbruch. Die CH-A-675211 offenbart ebenfalls ein Brandschutzelement zum automatischen eines Rohrs bzw. eines Mauerdurchbruchs.

Durch die DE-A-196 47 241 ist ein Verschlussdeckel bekannt geworden, der in eine Revisionsöffnung für Brandschutzwände und -decken einsetzbar ist. Der Verschlussdeckel besitzt einen Rahmen, in den eine vordere Platte eingesetzt ist. Weiter sind Streifen aus aufschäumendem Material vorgesehen. Ein Scharnier ermöglicht ein Aufklappen.

Die DE-A-198 34 941 offenbart ein Brandschutzschott für Rohrdurchführungen durch eine Montagewand aus Gipskartonplatten. Bei diesem bildet eine Blechplatte ein Gehäuse, in dem expandierendes Brandschutzmaterial eingesetzt ist. Die Platte besitzt einen Durchgang sowie wenigstens einen rohrförmigen Ansatz, der innenseitig mit dem Brandschutzmaterial ausgekleidet ist. Die DE-A-19840712 offenbart eine Revisonsbetätigungstür, die eine im Türrahmen eingeklebte, im Brandfall expandierende Dichtung und eine Hinterfütterung aus einer Feuerschutzplatte aufweist. Die Tür ist in eine Montagewand aus Gipskartonplatten eingebaut.

Der Erfindung liegt die Aufgabe zugrunde, eine Sanitäreinrichtung der genannten Art zu schaffen, bei dem das Brandschutzelement sehr einfach im Rohbau montierbar ist. Die Sanitäreinrichtung soll trotzdem kostengünstig herstellbar und einen wirksamen Brandschutz ermöglichen.

Die Erfindung ist gemäss Anspruch 1 gelöst. Das Brandschutzelement kann somit im Rohbau am Montagegestell befestigt werden, falls ein Brandschutz gewünscht ist. Das Brandschutzelement ist im Brandfall mit dem Montagegestell verbunden und verbleibt auch dann in der vorgesehenen Position, wenn andere Teile zerstört und beispielsweise weggeschmolzen sind. Die Rastverbindung kann einfach und ohne Werkzeuge gefügt und wieder gelöst werden kann. Das Brandschutzelement ist beispielsweise für den Verschluss der Revisionsöffnung für einen Spülkasten vorgesehen. Es bildet in diesem Fall vorzugsweise die Verschlussplatte, die üblicherweise in einer solchen Revisionsöffnung angeordnet ist und Durchbrüche für eine Drückerstange und Befestigungselemente, beispielsweise Gewindebolzen aufweist. Bei einer Revision kann dieses Brandschutzelement oder ein Teil dieses Elements aus der Revisionsöffnung herausgenommen werden, so dass der Spülkasten für eine Revision zugänglich ist. Das Brandschutzelement besitzt vorzugsweise eine Platte, die am Montagegestell befestigbar ist.

Die Befestigungsmittel weisen wenigstens ein Rastteil und ein Einhängeteil auf, so dass das Brandschutzelement am Montagerahmen in einem ersten Montageschritt eingehängt und dann mit einer Bewegung am Montagerahmen verrastbar ist.

Durch die Kombination aus Einhängen und anschliessendem Verschwenken mit Verrasten wird eine schnelle, einfache und leicht auszuführende Verbindung bereitgestellt.

Die Befestigungsmittel zum Befestigen des Brandschutzelements sind gemäss einer Weiterbildung der Erfindung Blechteile. Diese bleiben auch im Brandfall erhalten und können sehr einfach und günstig hergestellt werden. Die Blechteile ermöglichen auch eine einfache Befestigung, beispielsweise mit einem Rastteil und einem Einhängeteil. Bei der Montage kann das Brandschutzelement am Montagegestell eingehängt und mit einer Schwenkbewegung am Montagerahmen verrastet werden.

Nach einer Weiterbildung der Erfindung ist vorgesehen, dass das Brandschutzmaterial plattenförmig ausgebildet und sandwichartig zwischen zwei Blechplatten angeordnet ist. Die Blechplatten bilden ein Gehäuse, gegen das das Brandschutzmaterial sich expandieren kann. Die Platten bzw. das Gehäuse bilden einen Gegendruck, so dass das Brandschutzmaterial in Öffnungen bzw. Durchbrüche expandiert und diese damit verschliesst.

Nach einer Weiterbildung der Erfindung ist vorgesehen, dass wenigstens eine der beiden Blechplatten eine Öffnung aufweist, durch welche im Brandfall expandierendes Brandschutzmaterial austreten kann und dass diese wenigstens eine Öffnung durch ein im Brandfall wegschmelzendes Teil verschlossen ist. Sind sämtliche Durchgänge und Öffnungen verschlossen, so würde sich bei weiter expandierendem Brandschutzmaterial ein sehr hoher Druck aufbauen. Dieser kann vermieden werden, indem das Brandschutzmaterial nach dem Wegschmelzen des genannten Teils durch die Öffnung austreten kann.

Nach einer Weiterbildung der Erfindung ist vorgesehen, dass das Brandschutzelement zur Wärmedämmung wenigstens eine Metallplatte aufweist, die einen Brandschutz-Farbanstrich aufweist. Alternativ ist eine Platte aus Kalziumsilikat oder einem ähnlichen Material vorgesehen. Das Brandschutzelement verhindert in diesem Fall nicht nur den Durchgang von Feuer und Rauch, sondern auch den Durchgang von Hitze durch die zu verschliessenden Öffnungen.

Die Sanitäreinrichtung ist beispielsweise eine WC-Einrichtung mit einem Spülkasten und einer WC-Schüssel. Die Sanitäreinrichtung kann aber auch beispielsweise ein Urinal oder beispielsweise eine Waschschüssel aufweisen. Vorzugsweise besitzt eine solche Sanitäreinrichtung zwei Brandschutzelemente, wobei das eine für die Revisionsöffnung des Spülkastens und das andere für den Anschluss des Keramikkörpers vorgesehen ist. Beide Brandschutzelemente können im Rohbau und somit vor der Montage der Wand und des Keramikkörpers montiert werden. Mit geeigneten Bauschutzelementen können diese beim weiteren Ausbau geschützt werden. Dies Bauschutzelemente werden dann schlussendlich entfernt.

Bei einer solchen Sanitäreinrichtung sind die Brandschutzelemente somit Bauteile, mit denen die Sanitäreinrichtung im Fall eines gewünschten Brandschutzes ausgerüstet werden kann. Ist ein solcher Brandschutz nicht erforderlich, so werden entsprechend diese Brandschutzelemente nicht montiert. Ausser den Brandschutzelementen sind die üblichen Teile und Elemente der Sanitäreinrichtung gleich. Die erfindungsgemässen Brandschutzelemente sind somit auch im Hinblick auf die Lagerhaltung vorteilhaft.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 3: schematisch das Befestigen eines Brandschutzelementes an einem Montagegestell,
- Figur 4: schematisch das Montieren eines Brandschutzelementes am Montagegestell,
- Figur 5: ein vertikaler Schnitt durch eine fertig erstellte Sanitäreinrichtung,

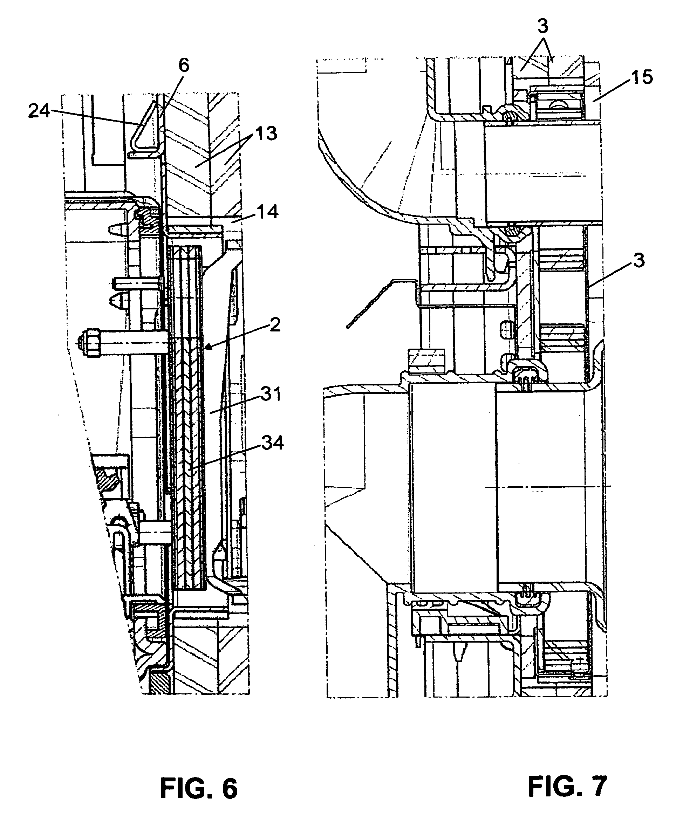

- Figur 6: ein vergrösserter Ausschnitt aus der Figur 5 im Bereich der Revisionsöffnung des Spülkastens,
- Figur 7: ein vergrösserter Ausschnitt aus der Figur 4 im Bereich des Anschlusses des Keramikkörpers,
- Figur 8: eine räumliche Ansicht eines erfindungsgemässen Brandschutzelementes, wobei einzelne Teile aus zeichnerischen Gründen auseinander gezogen sind,
- Figur 9: eine Ansicht eines erfindungsgemässen Brandschutzelementes,
- Figur 10: ein Schnitt durch das Brandschutzelement entlang der Linie X-X der Figur 9,
- Fig. 11 + 12: räumliche Ansichten des Brandschutzelementes gemäss den Figuren 9 bis 10 und
- Figur 13: eine räumliche Ansicht des Brandschutzelementes gemäss den Figuren 9 bis 12, wobei einzelne Teile aus zeichnerischen Gründen auseinander gezogen sind.

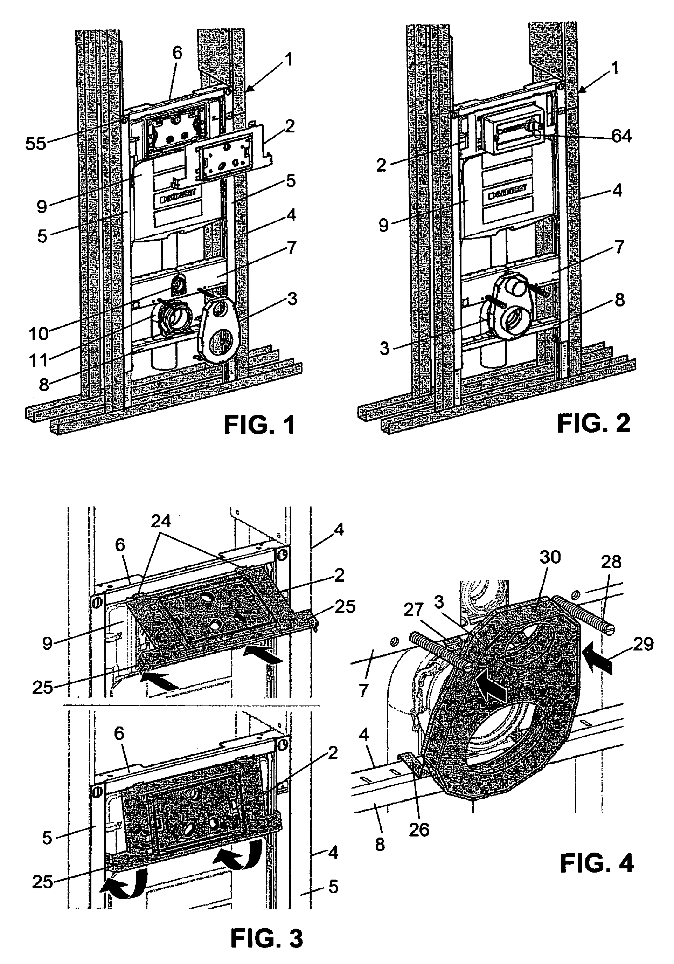

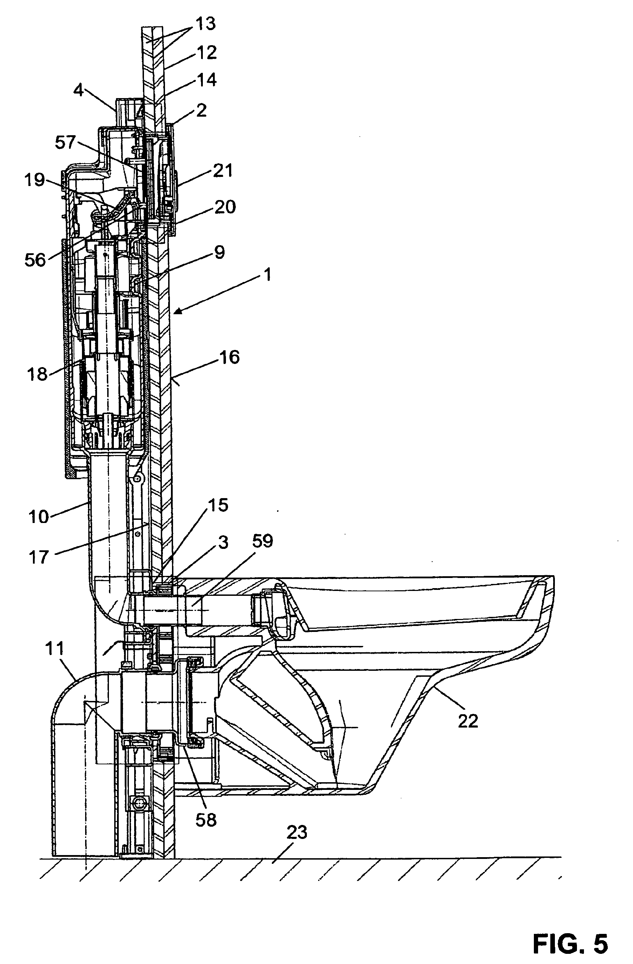

Die Sanitäreinrichtung 1 weist ein Montagegestell 4 auf, das gemäss Figur 5 auf einen Gebäudeboden 23 gestellt und an einer hier nicht gezeigten Gebäudewand abgestützt ist. Es kann gemäss den Figuren 1 und 2 durch Beplankungsschienen 55 ergänzt sein, an denen eine Wand 12 aus Platten 13 gelagert ist. An einer Vorderseite 16 der Wand 12 können beispielsweise hier nicht gezeigte Fliesen angebracht werden. Das Montagegestell 4 besitzt zwei Vertikalstreben 5 und Traversen 6, 7 und 8, die mit diesen Vertikalstreben 5 fest verbunden sind. Im Montagegestell 4 ist ein Spülkasten 9 gelagert, der in üblicher Weise eine Betätigungsvorrichtung 19 für ein Ablaufventil 18 aufweist. Die Betätigung des Ablaufventils 18 erfolgt an einer Taste 21, die in einer Betätigungsplatte 20 gelagert ist und die über eine Drückerstange 56 mit der Betätigungsvorrichtung 19 verbunden ist. Die Drückerstange 56 durchragt eine Öffnung 14 der Wand 12, welche mit der Betätigungsplatte 20 abgedeckt ist. Der Spülkasten 9 besitzt eine entsprechende Öffnung 57. In die Öffnung 14 ist ein Brandschutzelement 2 eingesetzt, das am Montagegestell 4 lösbar befestigt ist und das bei einer Revision des Spülkastens 9 nach dem Entfernen der Betätigungsplatte 20 abgenommen werden kann, so dass die Öffnung 57 des Spülkastens 9 frei ist.

Der Spülkasten 9 ist über ein Spülrohr 10 gemäss Figur 5 mit einer WC-Schüssel 22 oder einem anderen Keramikteil, beispielsweise einer Urinalschüssel verbunden. Das Spülrohr 10 ist durch eine weitere Öffnung 15 der Wand 12 hindurch mit der WC-Schüssel 22 verbunden. Die WC-Schüssel 22 ist über eine Muffe 58 mit einem Abflussrohr 11 verbunden. Die Muffe 58 geht durch die Öffnung 15 hindurch und verbindet in bekannter Weise die WC-Schüssel 22 mit dem Abflussrohr 11. In die Öffnung 15 ist ein weiteres Brandschutzelement 3 eingesetzt und umgreift die Muffe 58 als auch ein Rohr 59, welches das Spülrohr 10 mit der WC-Schüssel 22 verbindet. Das Brandschutzelement 3 ist ebenfalls am Montagegestell 4 lösbar befestigt.

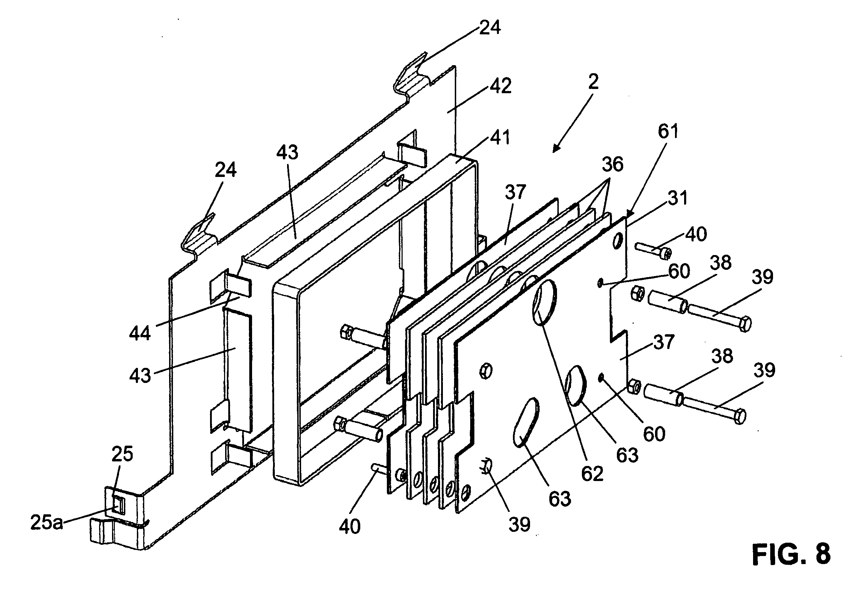

Das Brandschutzelement 2 besitzt gemäss Figur 8 eine Platte 42, die eine Öffnung 44 besitzt, die von einem Kragen 43 umgeben ist, auf den ein Rahmen 41 aufgesetzt ist. Die Platte 42 besteht aus Blech und der Rahmen 41 aus einem Brandschutzmaterial, insbesondere intumeszierendem Material. In die Öffnung 44 ist ein Einsatz 61 eingesetzt, der ein Gehäuse 31 aus zwei aus Blech hergestellten Platten 37 und drei Platten 36 aus Brandschutzmaterial besteht. Die Platten 37 und die Platten 36 sind mit Schrauben 39 zusammengehalten, welche durch Bohrungen 60 hindurch gesteckt sind. Zwischen den beiden Platten 37 sind auf den Schrauben 39 Hülsen 38 angeordnet, welche in die Bohrungen 60 der Platten 37 hinein ragen. Mit Schrauben 40 ist der Einsatz 61 an der Platte 42 lösbar befestigt. Bei einer Revision kann somit der Einsatz 61 durch Lösen der Befestigungsschrauben 40 von der Platte 42 abgenommen werden. Die Platten 36 und 37 besitzen Öffnungen 63 für den Durchgang der Drückerstangen 56 sowie eine Öffnung 62 für den Durchgang von hier nicht gezeigten Bedienungsteilen. Im Brandfall expandieren oberhalb einer vorbestimmten Temperatur der Rahmen 41 und die Platten 36. Hierbei wird die Öffnung 14 vollständig verschlossen, so dass Feuer und Rauch nicht durch diese hindurchdringen können. Ebenfalls werden die Öffnungen 62 und 63 durch die Expansion der Platten 36 verschlossen. Bei Hitzeeinwirkung schmelzen die aus Kunststoff hergestellten Hülsen 38, so dass das Brandschutzmaterial weiter expandieren kann. Ein übermässiger und gefährlicher Druck zwischen den Platten 37 kann dadurch vermieden werden. Der Einsatz 61 ist wie ersichtlich sandwichartig aus den Platten 36 und 37 aufgebaut. Anstelle von drei Platten 36 können auch weniger oder mehr solche Platten 36 vorgesehen sein. Grundsätzlich ist auch eine Ausführung mit lediglich einer Platte 36 möglich. Die Platten 36 können zudem auch aus mehreren einzelnen Teilen hergestellt sein.

An einem oberen Rand der Platte 42 sind im Abstand zueinander zwei Befestigungsteile 24 angeordnet, die abgebogene Blechteile sind und die als Befestigungslasche dienen. Seitlich unten sind gegenüber liegend zwei weitere Befestigungsteile 25 angeordnet, die ebenfalls abgebogene Blechteile sind. Diese Teile 25 sind Rastelemente und besitzen jeweils eine seitlich vorspringende Rastzunge 25a. Mit den Befestigungsteilen 24 und 25 kann das Brandschutzelement 2 sehr einfach und schnell ohne Werkzeug lösbar am Montagegestell 4 befestigt werden, wie die Figur 3 zeigt. Beim Montieren wird das Brandschutzelement 2 mit den Befestigungsteilen 24 an der Traverse 6 angelegt, wie in Figur 3 oben gezeigt ist. Anschliessend wird das Brandschutzelement 2 nach unten geschwenkt, so dass die Befestigungsteile 25 jeweils an einer Vertikalstrebe 5 einrasten. Das Brandschutzelement 2 ist damit im Rohbau vor dem Anbringen der Wand 12 in der vorgesehenen Stellung sicher und dennoch einfach lösbar positioniert. Gemäss Figur 2 wird für einen weiteren Ausbau auf das Brandschutzelement 2 ein Bauschutzelement 64 aufgesetzt, das dann später entfernt wird.

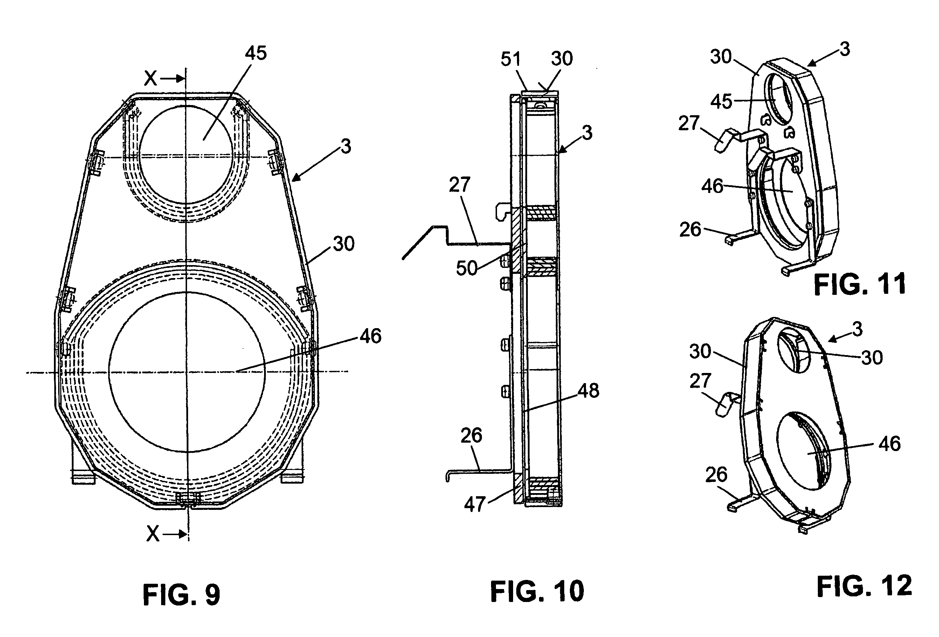

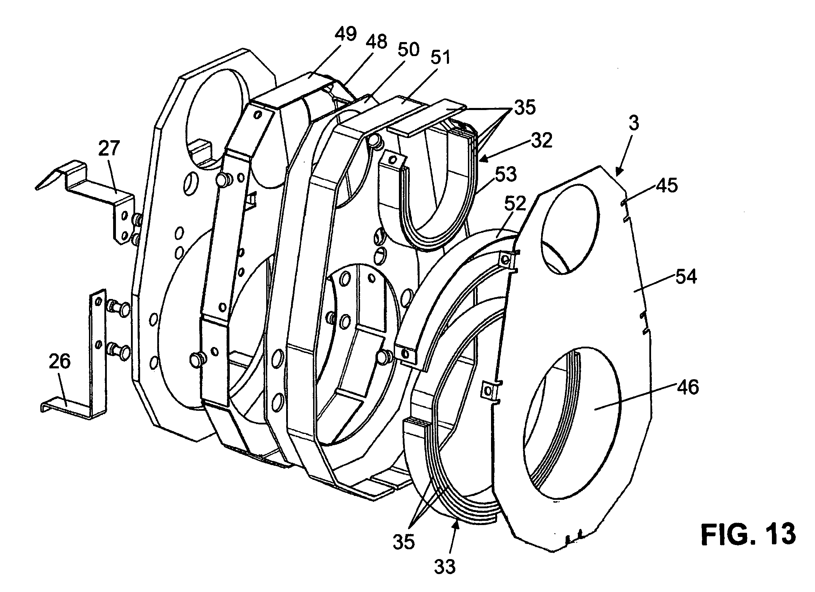

Das in den Figuren 9 bis 13 gezeigte Brandschutzelement 3 wird wie oben erwähnt in die korrespondierende Öffnung 15 eingesetzt. Es besitzt einen oberen Durchgang 45 für das Spülrohr 10 und einen unteren grösseren Durchgang 46 für das Abflussrohr 11. Es besitzt gemäss den Figuren 10 und 13 eine Rückseite 17, eine Wärmedämmplatte 47, die beispielsweise aus Kalziumsilikat hergestellt ist. Diese Wärmedämmplatte 47 ist mit einer Blechplatte 48 verbunden, beispielsweise verschraubt, die einen Rand 49 besitzt, der aus abgebogenen Blechteilen hergestellt ist. Auf diesen Rand 49 ist ein Rahmen 51 aus intumeszierendem Material und somit aus Brandschutzmaterial hergestellt. Der Rahmen 51 umgibt somit den Rand 49 vollständig. Innerhalb des Randes 49 ist auf der Blechplatte 48 eine Platte 50 angeordnet, die ebenfalls aus Brandschutzmaterial hergestellt ist. Am Rand 49 ist in einem oberen Bereich ein U-förmiger Halter 53 aus Blech befestigt, in den Streifen 35 aus Brandschutzmaterial eingelegt sind. Ein weiterer bogenförmiger Halter 52 ist in einem unteren Bereich am Rand 49 befestigt. Dieser nimmt ringförmig angeordnete Streifen 35 auf. Die Streifen 35 bilden somit ein Brandschutzmaterial 32 und die Streifen 35 ein weiteres Brandschutzmaterial 33. Am Rahmen 49 ist schliesslich eine frontseitig angeordnete Platte 54 aus Blech befestigt, beispielsweise angeschraubt. Die beiden Platten 48 und 54 bilden somit ein Gehäuse, in dem das Brandschutzmaterial 32 und das Brandschutzmaterial 33 angeordnet sind. Im Brandfall dehnt sich das Brandschutzmaterial 32 als auch das Brandschutzmaterial 33 aus und füllt die Durchgänge 45 und 46, wobei die Halter 52 und 53 den Gegendruck aufnehmen. Aufgrund des Druckes des sich expandierenden Brandschutzmaterials werden die Muffe 58 und das Rohr 59 vollständig zusammengepresst. Die entsprechenden Durchgänge 45 und 46 werden somit durch das Brandschutzmaterial 32 bzw. 33 verschlossen. Feuer und Rauch kann dann somit durch die Wand 12 nicht hindurch treten. Zudem verhindert die Platte 47, dass sich Hitze durch die Öffnung 15 ausbreiten kann. Der Brandschutz wirkt in beiden Richtungen und somit in Figur 5 von der Vorderseite 16 zur Rückseite 17 als auch in der anderen Richtung.

An der Rückseite des Brandschutzelementes 3 sind Befestigungsteile 26 und 27 befestigt, insbesondere angeschraubt. Diese Teile 26 und 27 sind vorzugsweise ebenfalls aus Blech hergestellt. Sie ermöglichen eine Befestigung des Brandschutzelementes 3 am Montagegestell 4, wie dies in Figur 4 gezeigt ist. Mit den beiden Befestigungsteilen 26 wird das Brandschutzelement 3 auf die Traverse 8 gestellt. In Richtung der Pfeile 29 wird nun das Brandschutzelement 3 gekippt, so dass die Befestigungsteile 27 federnd an der oberen Traverse 7 einrasten. Das Brandschutzelement 3 kann somit auch sehr einfach und ohne Werkzeug am Montagegestell 4 befestigt werden. Für die weiteren Bauarbeiten können die beiden Durchgänge 45 und 46 in an sich bekannter Weise mit einem Bauschutz verschlossen werden, wie dies in Figur 2 gezeigt ist.

Sind die beiden Brandschutzelemente 2 und 3 gemäss Figur 2 montiert, so können die weiteren Montagearbeiten weitergeführt und schliesslich die Wand 12 angebracht werden. Nach dem Entfernen der Bauschutzelemente 2 und 3 wird die WC-Schüssel 22 an den in Figur 4 gezeigten Gewindestangen 28 befestigt. Die Betätigungsplatte 20 wird in bekannter Weise befestigt, so dass schliesslich die beiden Brandschutzelemente 2 und 3 von aussen nicht mehr sichtbar sind. Die Sanitäreinrichtung 1 kann auch ohne die beiden Brandschutzelemente 2 und 3 erstellt werden, wobei die erwähnten anderen Teile ohne Änderung übernommen werden können. Die beiden Brandschutzelemente 2 und 3 bilden ein Brandverschluss-Set und sind somit ergänzende Bauteile, die wahlweise verwendet werden können. Bei der Verwendung der beiden Brandschutzelemente 2 und 3 bzw. des Brandverschluss-Sets wird der Montageaufwand und die Montagezeit gegenüber eine Montage ohne Brandverschluss-Set nur geringfügig erhöht.

### Bezugszeichenliste

| | | | |
|---|---|---|---|
| 1 | Sanitäreinrichtung | 33 | Brandschutzmaterial |
| 2 | Brandschutzelement | 34 | Brandschutzmaterial |
| 3 | Brandschutzelement | 35 | Streifen |
| 4 | Montagegestell | 36 | Platten |
| 5 | Vertikalstrebe | 37 | Platten |
| 6 | Traverse | 38 | Hülsen |
| 7 | Traverse | 39 | Schrauben |
| 8 | Traverse | 40 | Befestigungsschrauben |
| 9 | Spülkasten | 41 | Rahmen |
| 10 | Spülrohr | 42 | Platte |
| 11 | Abflussrohr | 43 | Kragen |
| 12 | Wand | 44 | Öffnung |
| 13 | Platten | 45 | Durchgang (Spülrohr) |
| 14 | Revisionsöffnung | 46 | Durchgang (Abflussrohr) |
| 15 | Öffnung | 47 | Wärmedämmplatte |
| 16 | Vorderseite | 48 | Blechplatte |
| 17 | Rückseite | 49 | Rand |
| 18 | Ablaufventil | 50 | Platte |
| 19 | Betätigungsvorrichtung | 51 | Rahmen |
| 20 | Betätigungsplatte | 52 | Halter |
| 21 | Betätigungstaste | 53 | Halter |
| 22 | WC-Schüssel | 54 | Platte |
| 23 | Gebäudeboden | 55 | Beplankungsschienen |
| 24 | Befestigungsteil | 56 | Drückerstange |
| 25 | Befestigungsteil | 57 | Öffnung |
| 25a | Rastzunge | 58 | Muffe |
| 26 | Befestigungsteil | 59 | Rohr |
| 27 | Befestigungsteil | 60 | Bohrungen |
| 28 | Gewindebolzen | 61 | Einsatz |
| 29 | Pfeil | 62 | Öffnung |
| 30 | Gehäuse | 63 | Öffnung |
| 31 | Gehäuse | 64 | Bauschutzelement |
| 32 | Brandschutzmaterial | | |

## Patentansprüche

1. Sanitäreinrichtung mit einem Brandschutzelement, welche Sanitäreinrichtung ein Montagegestell (4) für einen Sanitärkörper (22) und eine vor dem Montagegestell (4) angeordnete Wand (12) mit wenigstens einer mit dem Brandschutzelement zu verschliessende Öffnung (14, 15) aufweist, wobei das Brandschutzelement ein Gehäuse (37; 49, 54) aufweist, in dem wenigstens ein Brandschutzmittel (41, 36; 32, 33) angeordnet ist, das im Brandfall expandiert, **dadurch gekennzeichnet, dass** das Brandschutzelement Befestigungsmittel (24, 25; 26, 27) aufweist, mit dem es mit dem Montagegestell (4) verbunden ist und dass die Verbindung zwischen dem Montagegestell (4) und dem Brandschutzelement eine Rastverbindung zur werkzeuglosen Fügbarkeit und Lösbarkeit ist und dass die Befestigungsmittel (24, 25; 26, 27) wenigstens ein Rastteil (25, 27) und ein Einhängeteil (24, 26) aufweisen, so dass das Brandschutzelement am Montagerahmen (4) in einem ersten Montageschritt eingehängt und dann mit einer Bewegung am Montagerahmen (4) verrastbar ist.

2. Sanitäreinrichtung nach Anspruch 1, **dadurch gekennzeichnet, dass** die Befestigungsmittel (24, 25; 26, 27) Blechteile sind.

3. Sanitäreinrichtung nach einem der Ansprüche 1 bis 2, **dadurch gekennzeichnet, dass** das Brandschutzmaterial (32, 33; 36) mehrschichtig ausgebildet ist.

4. Sanitäreinrichtung nach einem der Ansprüche 1 bis 3, **dadurch gekennzeichnet, dass** das Brandschutzmaterial (36) plattenförmig ausgebildet und sandwichartig zwischen zwei Platten (37) angeordnet ist.

5. Sanitäreinrichtung nach Anspruch 4, **dadurch gekennzeichnet, dass** das Brandschutzelement aus mehreren, insbesondere drei oder als mehr als drei aneinander gelegten plattenförmigen Teilen hergestellt ist.

6. Sanitäreinrichtung nach Anspruch 4 oder 5, **dadurch gekennzeichnet, dass** es wenigstens eine Öffnung (60) aufweist, durch welche im Brandfall expandierendes Brandschutzmaterial (36) austreten kann und dass diese wenigstens eine Öffnung (60) durch im Brandfall wegschmelzendes Teil (38) verschlossen ist.

7. Sanitäreinrichtung nach einem der Ansprüche 4 bis 6, **dadurch gekennzeichnet, dass** es einen Einsatz (61) aufweist, der in eine Revisionsöffnung für einen Spülkasten (9) einsetzbar und für eine Revision ausbaubar ist.

8. Sanitäreinrichtung nach Anspruch 7, **dadurch gekennzeichnet, dass** der Einsatz (61) in eine Öffnung (44) einer Platte (42) eingesetzt ist, wobei diese Platte (42) die genannten Befestigungsteile (24, 25) zum Befestigen des Brandschutzelementes (2) am Montagerahmen (4) aufweist.

9. Sanitäreinrichtung nach einem der Ansprüche 1 bis 8, **dadurch gekennzeichnet, dass** es zum Verschliessen der Revisionsöffnung für einen Spülkasten (9) vorgesehen ist und Durchbrüche (62, 63) für eine Drückerstange (56) und Befestigungsteile aufweist, wobei diese Durchbrüche (62, 63) im Brandfall durch das Brandschutzmaterial verschlossen werden.

10. Sanitäreinrichtung nach einem der Ansprüche 1 bis 9, **dadurch gekennzeichnet, dass** es zur Wärmedämmung wenigstens eine Metallplatte aufweist, die einen Brandschutz-Farbanstrich besitzt.

11. Sanitäreinrichtung nach einem der Ansprüche 1 bis 10, **dadurch gekennzeichnet, dass** es für die Wärmedämmung wenigstens eine Platte (47) aus Kalziumsilikat oder einem anderen wärmedämmenden Material aufweist.

## Claims

1. A sanitary device with a flame retardant element, which sanitary device has a mounting frame (4) for a sanitary body (22) and wall (12) that is arranged in front of the mounting frame (4) and has at least one opening (14, 15) to be closed with the flame retardant element, wherein the flame retardant element has a housing (37; 49, 54) in which at least one flame inhibitor (41, 36; 32, 33) is arranged that expands in the event of a fire, **characterized in that** the flame retardant element has fastening means (24, 25; 26, 27) by means of which it is connected to the mounting frame (4), and that the connection between the mounting frame (4) and the flame retardant element is a latching connection for toolless joinability and detachability, and that the fastening means (24, 25; 26, 27) have at least one latching part (25, 27) and a hook-on part (24, 26) so that in a first mounting step, the flame retardant element is hooked on the mounting frame (4) and can then be latched onto the mounting frame (4) by means of a movement.

2. The sanitary device according to claim 1, **characterized in that** the fastening means (24, 25; 26, 27) are sheet metal parts.

3. The sanitary device according to any one of the claims 1 to 2, **characterized in that** the flame retardant material (32, 33; 36) is formed multilayered.

4. The sanitary device according to any one of the claims 1 to 3, **characterized in that** the flame retardant material (36) is formed plate-shaped and is arranged between the two plates (37) in a sandwich-like manner.

5. The sanitary device according to claim 4, **characterized in that** the flame retardant element is made from three or more than three parts that are laid next to each other.

6. The sanitary device according to claim 4 or claim 5, **characterized in that** it has at least one opening (60) through which flame retardant material (36) can exit that expands in the event of a fire, and that this at least one opening (60) is closed by a part (38) that melts in the event of a fire.

7. The sanitary device according to any one of the claims 4 to 6, **characterized in that** it has an insert (61) that can be inserted into an inspection opening for a flushing tank (9) and can be removed for inspection.

8. The sanitary device according to claim 7, **characterized in that** the insert (61) is inserted into an opening (44) of a plate (42), wherein this plate (42) has the mentioned fastening parts (24, 25) for fastening the flame retardant element (2) to the mounting frame (4).

9. The sanitary device according to any one of the claims 1 to 8, **characterized in that** it is provided for closing the inspection opening for a flushing tank (9) and has cut-outs (62, 63) for a push rod (56) and fastening parts, wherein in the event of a fire, these cut-outs (62, 63) are closed by the flame retardant material.

10. The sanitary device according to any one of the claims 1 to 9, **characterized in that** it has at least one metal plate for thermal insulation, which metal plate has a flame-retardant coat of paint.

11. The sanitary device according to any one of the claims 1 to 10, **characterized in that** for thermal insulation, it has at least one plate (47) made of calcium silicate or another thermally-insulating material.

## Revendications

1. Dispositif sanitaire avec un élément coupe-feu, lequel dispositif sanitaire comporte un châssis de montage (4) pour un corps sanitaire (22) et une paroi (12) disposée devant le châssis de montage (4) avec au moins une ouverture (14, 15) à fermer avec l'élément coupe-feu, l'élément coupe-feu comportant un boîtier (37 ; 49, 54) dans lequel est disposé au moins un moyen ignifuge (41, 36 ; 32, 33) qui se détend en cas d'incendie, **caractérisé en ce que** l'élément coupe-feu comporte des moyens de fixation (24, 25 ; 26, 27) par lesquels il est relié au châssis de montage (4) et **en ce que** la liaison entre le châssis de montage (4) et l'élément coupe-feu est une liaison par enclenchement, pour assurer la possibilité d'assemblage et de désassemblage sans outil et **en ce que** les moyens de fixation (24, 25 ; 26, 27) comportent au moins une pièce d'enclenchement (25, 27) et une pièce d'accrochage (24, 26), de sorte que l''élément coupe-feu soit d'accroché dans une première étape de montage au cadre de montage (4), puis enclenchable en un mouvement dans le cadre de montage (4).

2. Dispositif sanitaire selon la revendication 1, **caractérisé en ce que** les moyens de fixation (24, 25 ; 26, 27) sont des pièces en tôle.

3. Dispositif sanitaire selon l'une quelconque des revendications 1 à 2, **caractérisé en ce que** la matière ignifuge (32, 33 ; 36) est conçue en plusieurs couches.

4. Dispositif sanitaire selon l'une quelconque des revendications 1 à 3, **caractérisé en ce que** la matière ignifuge (36) est conçue en forme de panneaux et disposée en sandwich entre deux panneaux (37).

5. Dispositif sanitaire selon la revendication 4, **caractérisé en ce que** l'élément coupe-feu est fabriqué en plusieurs, notamment en trois ou en plus que trois pièces en forme de plaques superposées.

6. Dispositif sanitaire selon la revendication 4 ou la revendication 5, **caractérisé en ce qu'**il comporte au moins une ouverture (60) à travers laquelle de la matière ignifuge (36) en expansion en cas d'incendie peut s'échapper et **en ce que** ladite au moins une ouverture (60) est fermée par une pièce (38) disparaissant par fusion en cas d'incendie.

7. Dispositif sanitaire selon l'une quelconque des revendications 4 à 6, **caractérisé en ce qu'**il comporte un insert (61) qui peut s'insérer dans un regard pour un lavabo (9) et qui peut se retirer pour une révision.

8. Dispositif sanitaire selon la revendication 7, **caractérisé en ce que** l'insert (61) est inséré dans une ouverture (44) d'un panneau (42), ledit panneau (42) comportant les pièces de fixation (24, 25) citées pour fixer l'élément coupe-feu (2) sur le cadre de montage (4).

9. Dispositif sanitaire selon l'une quelconque des revendications 1 à 8, **caractérisé en ce qu'**il est prévu pour un lavabo (9) et comporte des percées (62, 63) pour une tige de poussoir (56) et des pièces de fixation, en cas d'incendie, lesdites percées (62, 63) étant bouchées par la matière ignifuge.

10. Dispositif sanitaire selon l'une quelconque des revendications 1 à 9, **caractérisé en ce que** pour l'isolation thermique, il comporte au moins un panneau métallique muni d'une peinture ignifuge.

11. Dispositif sanitaire selon l'une quelconque des revendications 1 à 10, **caractérisé en ce que** pour l'isolation thermique, il comporte au moins un panneau (47) en silicate de calcium ou en une autre matière isolante thermique.
